(19) **Europäisches Patentamt / European Patent Office / Office européen des brevets**

(11) **EP 4 394 487 B1**

(12) **FASCICULE DE BREVET EUROPEEN**

(45) Date de publication et mention
de la délivrance du brevet:
**12.11.2025   Bulletin 2025/46**

(21) Numéro de dépôt: **23220210.1**

(22) Date de dépôt: **26.12.2023**

(51) Classification Internationale des Brevets (IPC):
**G01N 15/1434** *(2024.01)*      **G02B 3/00** *(2006.01)*
**G02B 5/00** *(2006.01)*      **G02B 27/54** *(2006.01)*
**G01N 15/01** *(2024.01)*      **G01N 15/10** *(2024.01)*

(52) Classification Coopérative des Brevets (CPC):
**G01N 15/1434; G02B 3/0006; G02B 5/003;**
**G02B 27/54;** G01N 15/01; G01N 2015/016;
G01N 2015/1006; G01N 2015/144;
G01N 2015/1454

(54) **DISPOSITIF D'OBSERVATION D'UN ÉCHANTILLON PAR IMAGERIE**

VORRICHTUNG ZUR BEOBACHTUNG EINER PROBE MITTELS BILDGEBUNG

DEVICE FOR OBSERVING A SAMPLE BY IMAGING

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité:  **28.12.2022   FR 2214572**

(43) Date de publication de la demande:
**03.07.2024   Bulletin 2024/27**

(73) Titulaire: **Commissariat à l'Energie Atomique et
aux Energies
Alternatives
75015 Paris (FR)**

(72) Inventeurs:
• **LE PERCHEC, Jérôme**
  **38054 GRENOBLE Cedex 09 (FR)**
• **DUPOY, Mathieu**
  **38054 GRENOBLE Cedex 09 (FR)**

(74) Mandataire: **INNOV-GROUP
209 Avenue Berthelot
69007 Lyon (FR)**

(56) Documents cités:
EP-A1- 3 722 861      CN-A- 108 333 790
DE-A1- 19 624 421     US-A1- 2004 057 110
US-A1- 2013 084 598   US-A1- 2021 262 927

**Description**

## DOMAINE TECHNIQUE

L'invention concerne un dispositif d'observation d'un échantillon par strioscopie.

## ART ANTERIEUR

L'observation d'échantillons biologiques peut être confrontée à une difficulté liée au caractère transparent de certains objets biologiques, par exemple des cellules, des structures cellulaires ou des microorganismes. Afin d'adresser ce problème, on peut mettre en œuvre des techniques d'imagerie par strioscopie, visant à occulter des rayons lumineux émis par la source de lumière. On forme ainsi une image dite en champ sombre, ou à contraste de phase. Un exemple de mise en œuvre est décrit dans EP2556164B1.

Dans le domaine de l'infra-rouge, le brevet US11313792 décrit un dispositif et un procédé d'imagerie sans lentille, dans lequel une lame d'un échantillon est exposée à un rayonnement infra-rouge.

Les inventeurs proposent un dispositif permettant une observation d'un échantillon essentiellement transparent, c'est-à-dire comportant un grand nombre de particules transparentes.

## EXPOSE DE L'INVENTION

Un premier objet de l'invention est un dispositif d'observation d'un échantillon, comportant

- une source de lumière, configurée pour émettre une onde lumineuse selon une direction de propagation, selon une longueur d'onde d'émission ;
- un capteur d'image, comportant plusieurs pixels;
- une pluralité de microlentilles convergentes, chaque microlentille étant disposée face à un pixel, chaque microlentille comportant un foyer image, chaque microlentille étant configurée pour former, à partir d'ondes lumineuses issues de la source de lumière et se propageant parallèlement à la direction de propagation, un faisceau d'ondes lumineuses convergeant vers le foyer image de ladite microlentille ;
- le dispositif étant configuré pour maintenir l'échantillon entre la source de lumière et la matrice de microlentilles ;
- le dispositif étant caractérisé en ce qu'il comporte plusieurs éléments atténuants, chaque élément atténuant étant associé à une microlentille et à un pixel, chaque élément atténuant étant configuré pour atténuer les ondes lumineuses convergeant vers le foyer image de la lentille à laquelle il est associé, et en ce que :

  - chaque élément atténuant est :

    • soit un masque opaque à la longueur d'onde d'émission ;
    • soit un élément déphasant, formé d'un matériau transparent agencé pour induire un déphasage, le déphasage étant déterminé par rapport à une onde lumineuse se propageant en l'absence de l'élément atténuant ;

  - chaque élément atténuant s'étend entre la microlentille et le pixel auxquels il est associé ; de façon que chaque élément atténuant atténue chaque onde lumineuse se propageant vers ou depuis le foyer image d'une microlentille.

Selon un mode de réalisation préféré :

- les pixels sont coplanaires, et répartis selon un plan de détection ;
- les foyers image respectifs de chaque microlentille sont coplanaires, et forment un plan focal, parallèle au plan de détection ;
- les éléments atténuants s'étendent dans le plan focal ou dans un plan parallèle au plan focal.

Les éléments atténuants peuvent notamment s'étendre dans un plan parallèle au plan focal, ledit plan parallèle étant disposé à une distance inférieure à 1 mm du plan focal.

Selon une possibilité :

- les pixels sont coplanaires, et répartis selon un plan de détection ;
- chaque élément atténuant s'étend, parallèlement au plan de détection, avec une diagonale ou un plus grand diamètre inférieur à 2 fois la longueur d'onde d'émission.

Selon un mode de réalisation, chaque élément atténuant est un masque opaque, à la longueur d'onde d'émission.

Selon un mode de réalisation :

- chaque élément atténuant est un élément déphasant;
- le déphasage engendré par chaque élément déphasant est du quart de la longueur d'onde d'émission, où d'un multiple impair du quart de la longueur d'onde d'émission.

Selon un mode de réalisation :

- chaque élément atténuant est un élément déphasant;
- chaque élément atténuant est formé d'une inclusion d'un premier matériau dans ou sur une couche support formée d'un deuxième matériau.

Chaque élément atténuant peut être solidaire d'une couche support, la couche support étant solidaire de la pluralité de microlentilles ou disposée à distance de la pluralité de microlentilles. Chaque élément atténuant peut être est solidaire du capteur d'image.

La longueur d'onde d'émission peut être comprise entre 800 nm et 15 µm.

La distance entre l'échantillon et la pluralité de microlentilles peut être inférieure à 1 mm ou à 500 µm ;

La distance entre la pluralité de microlentilles et le capteur d'image peut être inférieure à 1 mm ou à 500 µm ;

La distance entre l'échantillon et le capteur d'image peut être inférieure à 1 mm.

Un autre objet de l'invention est un procédé d'observation d'un échantillon à l'aide d'un dispositif selon le premier objet de l'invention. L'échantillon est disposé entre les microlentilles et la source de lumière. L'échantillon peut comporter des particules transparentes, par exemple des particules biologiques.

L'invention sera mieux comprise à la lecture de l'exposé des exemples de réalisation présentés, dans la suite de la description, en lien avec les figures listées ci-dessous.

## FIGURES

La figure 1A représente un premier mode de réalisation de l'invention.

La figure 1B montre un détail de l'exemple représenté sur la figure 1A.

La figure 2 montre un deuxième mode de réalisation de l'invention.

La figure 3 montre un troisième mode de réalisation de l'invention.

La figure 4 montre un quatrième mode de réalisation de l'invention.

La figure 5 montre un cinquième mode de réalisation de l'invention.

## EXPOSE DE MODES DE REALISATION PARTICULIERS

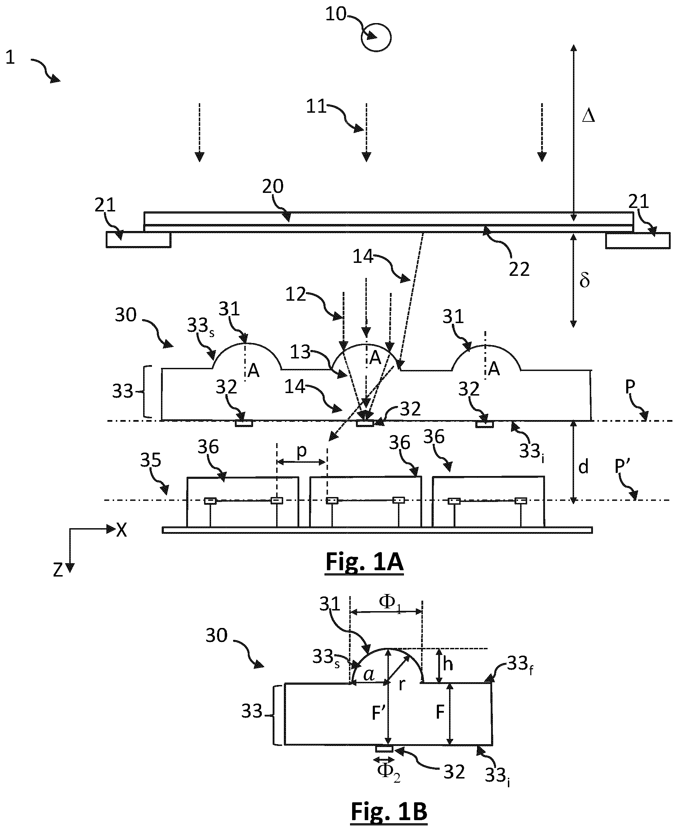

La figure 1A montre un premier mode de réalisation d'un dispositif 1 selon l'invention. Une source de lumière 10, de préférence monochromatique, ou pouvant être considérée comme telle, produit une onde lumineuse 11 se propageant parallèlement à un axe de propagation Z. La source de lumière peut notamment être un laser. Dans l'exemple représenté, l'onde lumineuse est émise selon une longueur d'onde d'émission infra-rouge, par exemple comprise entre 800 nm et 15 µm. Toutefois, l'invention peut ne pas être limitée au domaine spectral infra-rouge et peut être mise en œuvre dans le domaine spectral visible ou ultra-violet.

Le dispositif est destiné à l'observation d'un échantillon 20. L'échantillon 20 est maintenu sur un élément de maintien 21. Dans cet exemple, l'échantillon 20 un échantillon biologique que l'on souhaite caractériser. L'échantillon est déposé sur une lame transparente 22 faisant office de support d'échantillon. Par fine épaisseur, on entend une épaisseur de préférence inférieure à 100 µm, et de préférence inférieure à 10 µm, typiquement quelques micromètres. L'échantillon s'étend de préférence perpendiculairement ou sensiblement perpendiculairement à l'axe de propagation Z. Le terme sensiblement perpendiculaire signifie perpendiculaire en admettant une tolérance angulaire de quelques degrés, de préférence inférieure à 10° ou 5° ou 1°.

L'échantillon peut comporter des particules transparentes, dont on souhaite évaluer une distribution spatiale dans l'échantillon. Il peut par exemple s'agir de particules biologiques, telles que des cellules, par exemple de type globule blanc, ou des microorganismes. L'échantillon peut être liquide, auquel cas la lame transparente 22 forme le fond d'une chambre fluidique.

De préférence, l'échantillon ne comporte pas d'agents de marquage colorés ou fluorescents, destinés à se fixer sur un type de particule prédéterminé. L'observation de l'échantillon est ainsi non destructive.

La lame 22 est transparente vis-à-vis de l'onde lumineuse incidente 11. Lorsque la longueur d'onde d'émission se situe dans l'infra-rouge, la lame 22 peut comprendre ou être constituée de matériaux tels le silicium, le germanium, le fluorure de calcium ($CaF_2$), le fluorure de baryum ($BaF_2$). De préférence, la lame transparente 22 comporte un revêtement antireflet.

L'échantillon est essentiellement transparent, ou translucide, vis-à-vis de l'onde lumineuse incidente. Par essentiellement transparent, il est entendu que l'échantillon n'absorbe qu'une faible partie de l'onde lumineuse incidente 11. L'échantillon comporte des objets microscopiques de type cellules ou microorganismes qui diffusent ou diffractent l'onde lumineuse incidente 11, ce qui forme une onde lumineuse déviée 14. L'absorption de l'onde lumineuse incidente 11 par l'échantillon est faible, typiquement inférieure à 50 %, voire à 10%. L'effet principal de l'échantillon sur l'onde lumineuse incidente est une déviation, par diffusion, ou un déphasage. Le déphasage est induit par une variation de l'indice de réfraction des objets microscopiques par rapport au reste de l'échantillon, ainsi que par l'épaisseur desdits objets microscopiques.

Sur la figure 1A, on a représenté une onde lumineuse 12 transmise par l'échantillon, ainsi qu'une onde lumineuse 14 résultant de la diffusion et/ou de la réfraction de l'onde lumineuse incidente 11 par des particules contenues dans l'échantillon. Par onde lumineuse transmise, on entend une onde lumineuse se propageant, en aval de l'échantillon, selon la même direction de propagation qu'en amont de l'échantillon, en l'occurrence selon l'axe Z.

La distance ∆ entre la source de lumière et l'échantillon, selon l'axe Z, est de préférence supérieure à 1 cm. Elle est de préférence comprise entre 2 et 30 cm . De préférence, la lumière parvient à l'échantillon sous la forme d'ondes planes, ou pouvant être considérées comme telles.

La source de lumière 10 est de préférence une source laser. Il peut notamment s'agir d'une source laser accordable en longueur d'onde, par exemple un laser QCL, acronyme de Quantum Cascade Laser, signifiant laser à cascade quantique, en particulier un laser à cavité externe. La largeur de la bande spectrale d'émission de la source de lumière est de préférence inférieure à 50 nm, voire à 10 nm, voire à 5 nm. Une source de lumière peut comporter plusieurs sources laser élémentaires QCL, émettant respectivement dans différentes bandes spectrales.

Le dispositif comporte un réseau 30 de microlentilles, comportant plusieurs lentilles convergentes 31. Dans cet exemple, le réseau 30 est une matrice de microlentilles 31 agencées régulièrement. Dans l'exemple représenté sur la figure 1A, chaque lentille est délimitée par une surface externe $33_s$ hémisphérique. Le terme microlentille désigne une lentille dont le diamètre ou la plus grande diagonale est inférieur à 1 mm voire à 100 $\mu$m. De façon usuelle, le diamètre ou la diagonale de chaque microlentille mesure quelques dizaines de $\mu$m.

Le dispositif comporte un capteur d'image 35, comportant des pixels 36. Selon la direction de propagation de l'onde lumineuse émise par la source de lumière, chaque pixel est aligné par rapport à une microlentille convergente 31. Ainsi, chaque pixel 36 est associé à la microlentille 31 avec laquelle il est aligné. Dans cet exemple, le capteur d'image 35 est formé par une matrice de bolomètres, chaque bolomètre de la matrice présentant une bande spectrale de détection dans l'infra-rouge. Chaque bolomètre forme un pixel 36. Dans les exemples décrits par la suite, chaque pixel est formé par un bolomètre encapsulé sous vide. De préférence, la source de lumière 11 est configurée de façon que l'échantillon soit éclairé par un faisceau lumineux relativement homogène en intensité sur la largeur de l'échantillon analysé (i.e. la taille de la matrice de pixels).

Selon une variante, le capteur d'image 35 peut être une matrice de pixels CMOS, lorsque la longueur d'onde d'émission se situe dans le domaine visible. Il peut également s'agir d'une matrice de pixels infrarouge refroidis, élaborés à partir de HgCdTe ou des semiconducteurs InGaAs ou des semi-conducteurs III-V.

Quel que soit le capteur d'image, le pas p entre deux pixels adjacents est de préférence inférieur à 100 $\mu$m, voire à 500 $\mu$m. Il peut être de l'ordre de quelques dizaines de $\mu$m ou de 1 $\mu$m.

Chaque microlentille 31 définit un foyer image et un axe optique A. L'axe optique A de chaque microlentille est parallèle à l'axe de propagation Z de l'onde lumineuse 11. Sous l'effet d'une exposition à l'onde lumineuse 12 transmise par l'échantillon, se propageant parallèlement à l'axe de propagation Z, chaque microlentille focalise l'onde lumineuse 12 vers son foyer image. La focalisation forme une onde convergente 13 définissant un cône de lumière, dont le point de convergence correspond au foyer image de la microlentille 31.

Le dispositif 1 comporte, au niveau de chaque foyer image, un élément atténuant 32. Par « au niveau de chaque foyer image », on entend que l'élément atténuant est disposé soit sur le foyer image, soit en amont ou en aval du foyer image, la distance entre l'élément atténuant 32 et le foyer image étant faible, typiquement inférieure à 1 mm, voire inférieure à 500 $\mu$m ou à 100 $\mu$m. Chaque élément atténuant 32 est destiné à bloquer ou à atténuer la lumière 13 se propageant vers ou depuis le foyer image de chaque microlentille.

De préférence, les éléments atténuants 32 sont coplanaires, et appartiennent à un même plan focal P. Le plan focal P est de préférence perpendiculaire (ou sensiblement perpendiculaire) à l'axe de propagation Z. Dans le plan focal P, la dimension de chaque élément atténuant 32 correspond à la dimension du cône de lumière 13 formé par chaque microlentille 31. Notons que chaque masque peut être légèrement décalé par rapport au plan focal, sous réserve de masquer l'onde lumineuse convergente 13 formée par chaque microlentille 31. La dimension de chaque élément atténuant est par exemple inférieure à 2 ou 3 fois la longueur d'onde d'émission. Elle est de préférence inférieure ou égale à la longueur d'onde d'émission.

Dans l'exemple représenté sur la figure 1A, chaque élément atténuant 32 est un masque opaque à la longueur d'onde d'émission. Chaque masque peut être formé d'un métal de type Titane ou TiN (nitrure de Titane) ou Or. L'épaisseur de chaque masque peut être comprise entre quelques dizaines de nm et quelques $\mu$m.

La fonction du masque 32 est d'absorber la lumière émise par la source de lumière puis transmise par l'échantillon avant d'être focalisée par une microlentille. Ainsi, la lumière n'ayant pas interagi dans l'échantillon est bloquée. L'image formée par le capteur d'image est une image acquise en fond sombre. Les rayons 14 diffusés par l'échantillon, puis réfractés par une microlentille, se propagent en dehors des éléments atténuants 32 et atteignent le capteur d'image 35. Ainsi, l'image formée par le capteur d'image correspond aux ondes lumineuses 14 déviées et éventuellement déphasées par l'échantillon 20, selon les principes de la strioscopie. L'image formée par le capteur d'image comporte des points lumineux, chaque point lumineux correspondant à une particule diffusante de l'échantillon.

Dans l'exemple représenté sur la figure 1A, la matrice 30 de microlentilles est une matrice de type SIL (Solid Immersion Lens - lentille à immersion solide) : chaque microlentille 31 est disposée au contact d'une lame support 33, transparente. La lame support 33 s'étend entre chaque microlentille 31 et une face inférieure $33_i$. La face inférieure $33_i$ comprend le plan focal P de chaque microlentille. Les masques 32 sont disposés sur la face inférieure $33_i$ de la lame support 33.

La face inférieure $33_i$ de la lame support 33 peut être recouverte par une couche antireflet. Les masques sont soit déposés sur la couche antireflet, soit intégrés dans cette dernière.

Les masques 32 peuvent être déposés, sur la face inférieure $33_i$, par photolithographie ou par impression.

Les pixels 36 du capteur d'image 35 sont de préférence alignés selon un plan de détection P'. Le plan de détection P' est parallèle ou sensiblement parallèle au plan focal P. Par sensiblement parallèle, on entend parallèle à une tolérance angulaire près, inférieure à 10°, de préférence 5° ou 1°.

La distance $\delta$ entre l'échantillon 20 et la matrice de lentille 30 est de préférence inférieure à 1 cm, et de préférence inférieure à 1 mm ou à 500 $\mu$m. La distance d entre la matrice de microlentilles 30 et le capteur d'image 35 est de préférence inférieure à 1 mm ou à 500 $\mu$m. Selon une possibilité, les éléments atténuants 32 sont au contact du capteur d'image 35, en étant disposés à l'interface entre le capteur d'image 35 et la matrice de microlentilles 30.

Quel que soit le mode de réalisation, il est préférable que l'échantillon 20 soit disposé le plus proche possible du capteur d'image. Toutefois, il est avantageux de maintenir une distance $\delta$ non nulle, de façon à éviter une transmission d'ondes évanescentes au niveau de la surface externe amont $33_s$ de la matrice de microlentilles. Par « surface externe amont », on entend la surface des microlentilles la plus proche de l'échantillon 20.

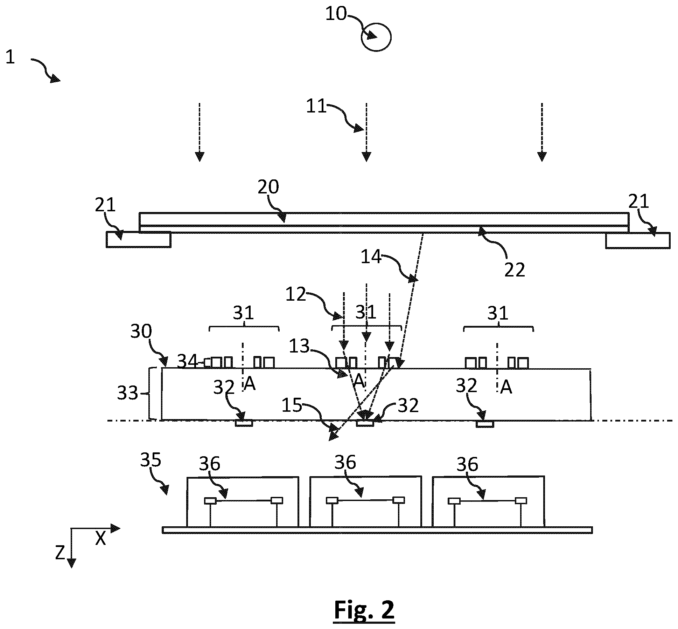

La surface externe amont $33_s$ est structurée pour permettre une focalisation de l'onde lumineuse 12 transmise par l'échantillon, se propageant parallèlement à l'axe de propagation Z. Dans l'exemple représenté sur la figure 1A, la surface externe amont $33_s$ comporte des parties courbes, par exemple hémisphériques, formant des microlentilles convergentes. Selon un autre mode de réalisation, représenté sur la figure 2, la surface externe amont $33_s$ est microstructurée, de façon à former des microlentilles convergentes.

La figure 1B montre un exemple de dimensionnement d'une matrice de microlentilles. L'épaisseur maximale F' de la lame support 33, mesurée selon l'axe Z entre le sommet des microlentilles et la face inférieure $33_i$ , correspond à la distance focale de chaque microlentille 31. Le rayon de courbure de chaque microlentille 31 est désigné par r. L'épaisseur de chaque microlentille est désignée h et est mesurée selon l'axe Z entre son sommet et une zone plane $33_f$ de la face supérieure $33_s$ de la lame support. La demi-largeur de chaque microlentille selon l'axe X est désignée a.

$$r = \frac{h^2 + a^2}{2h} \quad (1)$$

Lorsque la microlentille est hémisphérique, h = a et r = a.

L'épaisseur minimale F de la lame support 33 correspond à l'épaisseur de la lame entre la zone plane $33_f$ de la face supérieure $33_s$ de la lame support et la face inférieure $33_i$ de la lame support, mesurée selon l'axe Z. Si l'indice du matériau formant la microlentille est n, et si l'indice du milieu extérieur est égal à 1 (le milieu extérieur étant de l'air), alors

$$F = \frac{nr}{n-1} \quad (2)$$

et

$$F' = F + h \quad (3)$$

Le diamètre $\Phi_2$ de chaque masque 32, dans le plan focal, correspond au diamètre d'une tache d'Airy, qui correspond à la tache principale de diffraction.

$$\Phi_2 = \frac{2.44\lambda F}{n \times \Phi_1} \quad (4)$$

où
$\Phi_1$ est le diamètre de la microlentille et $\lambda$ est la longueur d'onde d'émission.

Lorsque la microlentille est hémisphérique, $r = a = h$ et $\Phi_1 = 2a = 2r$

$$\text{et } \Phi_2 = \frac{1.22\lambda}{n-1} \quad (5)$$

Si le pas p entre deux pixels adjacents est de 35 $\mu$m, en considérant des microlentilles en silicium (n = 3.4), et que h = 5 $\mu$m, a = 15 $\mu$m, $\Phi_1$ = 30 $\mu$m, la mise en œuvre des équations précédentes conduit à : r = 25 $\mu$m, F' = 35 $\mu$m, F = 30 $\mu$m.

En considérant $\lambda$ = 5 $\mu m$, on obtient $\Phi_2$=4.2 $\mu$m. En considérant $\lambda$ = 10 $\mu m$, on obtient $\Phi_2$=8.4 $\mu$m. Ainsi, le diamètre de chaque élément atténuant 32 est de l'ordre de grandeur de la longueur d'onde, en étant de préférence inférieur à cette dernière.

En prenant en compte une forme hémisphérique des microlentilles (h = a = 15 $\mu$m), F = 21 $\mu$m et $\Phi_2$=2.54 $\mu$m ($\lambda$ = 5 $\mu m$) ou $\Phi_2$=5.08 $\mu$m ($\lambda$ = 10 $\mu m$).

La figure 2 montre une configuration selon laquelle chaque microlentille 31 a une surface microstructurée pour permettre une focalisation, vers un point focal image, de l'onde lumineuse 12 se propageant, en amont de la lentille, parallèlement à l'axe de propagation Z. La lentille 31 est alors formée d'une couche 34 comportant une alternance de matériaux présentant des indices de réfraction différents. Selon la possibilité représentée sur la figure 2, la couche 34 comporte une microstructure formant une lentille de Fresnel discrétisée, symétrique par rapport à un axe optique A. D'autres types de réseaux de diffraction peuvent être envisagés, de tels réseaux étant formés d'une alternance périodique de matériaux présentant des indices de réfraction différents.

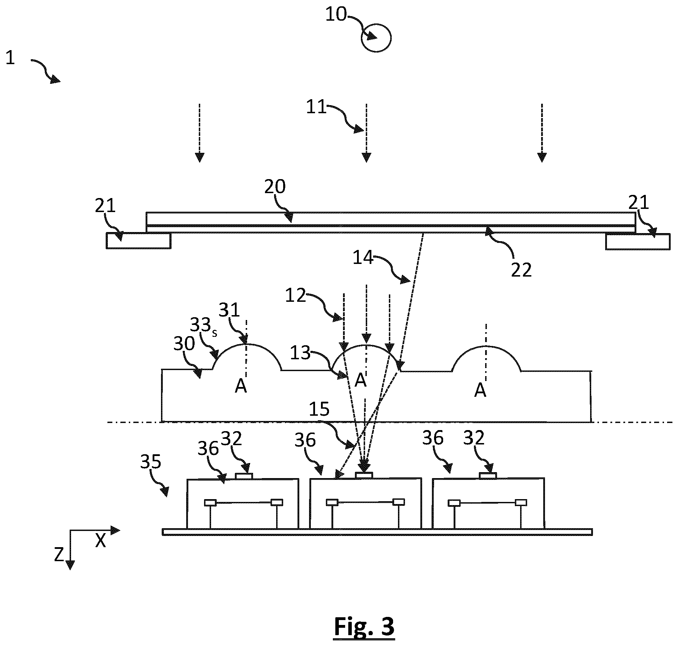

La figure 3 représente un mode de réalisation dans lequel les éléments atténuants 32 sont disposés sur chaque pixel, en étant de préférence centrés par rapport à l'axe optique A d'une microlentille 31 et par rapport à un pixel 36.

Selon une variante, les éléments atténuants sont disposés sur un support, distinct de la matrice 30 de microlentilles 31 et du capteur d'image 35. La distance entre les éléments atténuants et le capteur d'image peut être ajustable.

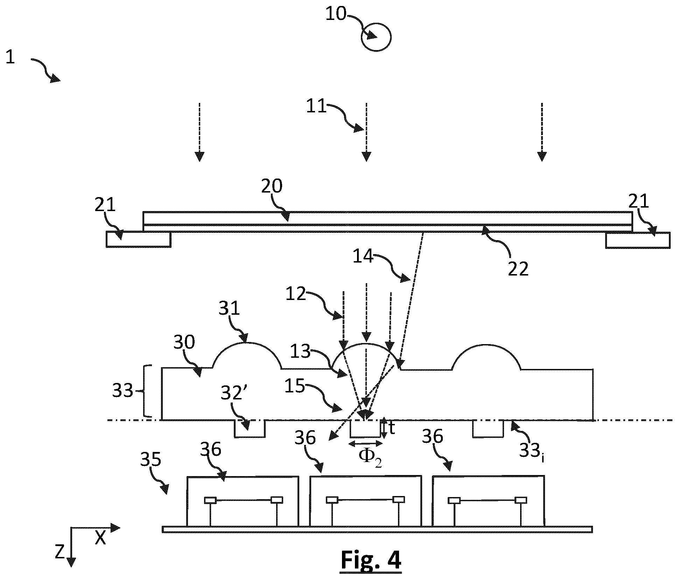

Dans les exemples représentés sur les figures 1A, 1B, 2 et 3, chaque élément atténuant est un masque opaque. Sur la figure 4, on a représenté un mode de réalisation dans lequel chaque élément atténuant 32' est transparent et est configuré pour produire un déphasage. Le déphasage est préférentiellement de $\frac{\pi}{2}$ (ou de $k\frac{\pi}{2}$, $k$ étant un entier impair) d'une onde lumineuse le traversant, de façon analogue à une lame quart d'onde. Chaque élément atténuant 32' est un élément déphasant. Si $n'$ est l'indice de réfraction d'un élément atténuant 32', l'épaisseur t de l'élément atténuant, selon l'axe de propagation Z, est telle que :

$$t = \frac{\lambda}{4(n'-n_{ext})} \quad (6)$$

avec n' > $n_{ext}$

où $n_{ext}$ est l'indice de réfraction du milieu extérieur à l'élément atténuant 32'.

Par exemple, si chaque élément atténuant 32' est formé du même matériau que la lame support 33 et que les microlentilles 31, par exemple du silicium (n = n' = 3.4), $t$ = 520 nm.

Selon ce mode de réalisation, l'onde convergente 13 réfractée par chaque microlentille 31 est déphasée de $\frac{\pi}{2}$. Dans ce mode de réalisation, les défauts de phase introduits par l'échantillon se traduisent par des variations relatives de l'éclairement du capteur d'image. Ces variations sont en outre sensibles au signe du déphasage de la lumière par l'échantillon. Ce mode de réalisation permet un contraste d'image amélioré par rapport au premier mode de réalisation.

Sur la configuration représentée sur la figure 4, chaque élément déphasant 32 est obtenu par apport de matière sur la face inférieure $33_i$ de la lame support 33.

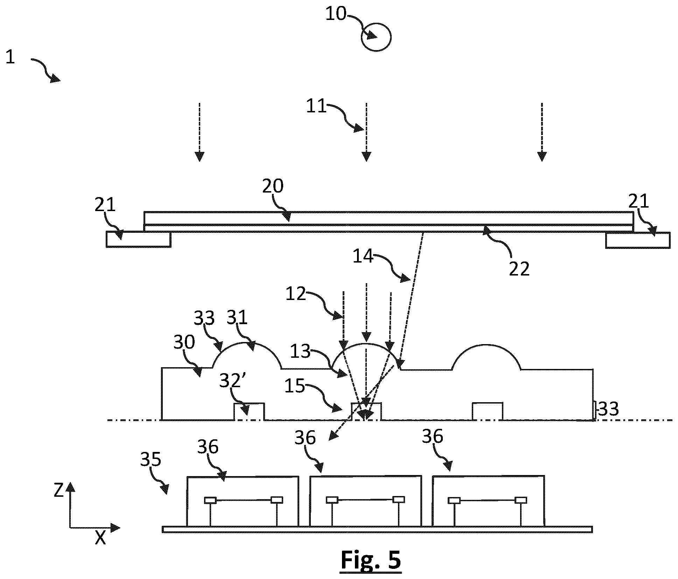

La figure 5 représente une variante du mode de réalisation décrit en lien avec la figure 4. Selon ce mode de réalisation, chaque élément déphasant 32' est obtenu par retrait de matière de la face inférieure $33_i$ de la lame support 33. L'indice de chaque élément déphasant est donc l'indice du milieu extérieur, par exemple de l'air. Dans ce cas, l'épaisseur t d'un élément 32', selon l'axe de propagation Z, est telle que :

$$t = \frac{\lambda}{4(n-n_{ext})} \quad (7)$$

avec n>$n_{ext}$, où n est l'indice de réfraction de la lame support 33.

Bien que décrit en lien avec une source de lumière émettant dans le domaine spectral infra-rouge, l'invention peut être mise en œuvre dans le domaine spectral visible ou UV.

D'une façon générale, chaque élément déphasant 32' est formé par ajout d'un premier matériau sur une couche support (33) formée d'un deuxième matériau (cf. figure 4, le premier matériau étant Si, qui est également le deuxième matériau), ou par inclusion d'un premier matériau dans la couche support (cf. figure 5, le premier matériau étant de l'air)

L'invention pourra être mise en œuvre pour l'observation d'échantillons essentiellement transparents, comportant des particules transparentes ou pouvant être considérées comme telles. Elle peut trouver des applications dans le domaine des échantillons biologiques, mais également ainsi que dans d'autres domaines industriels, par exemple le contrôle d'échantillons dans l'environnement ou dans l'industrie agroalimentaire. Elle s'applique aussi bien à des échantillons liquides que solides.

**Revendications**

1. Dispositif (1) d'observation d'un échantillon, comportant

 - une source de lumière (10), configurée pour émettre une onde lumineuse (11) selon une direction de propagation (Z), selon une longueur d'onde d'émission ;
 - un capteur d'image (35), comportant plusieurs pixels (36);
 - une pluralité (30) de microlentilles (31) convergentes, chaque microlentille étant disposée face à un pixel, chaque microlentille comportant un foyer image, chaque microlentille étant configurée pour former, à partir d'ondes lumineuses issues de la source de lumière, se propageant parallèlement à la direction de propagation, un faisceau d'ondes lumineuses (13) convergeant vers le foyer image de ladite microlentille ;
 - le dispositif étant configuré pour maintenir l'échantillon (20) entre la source de lumière et la matrice de microlentilles ;
 - le dispositif étant **caractérisé en ce qu'**il comporte plusieurs éléments atténuants (32, 32'), chaque élément atténuant étant associé à une microlentille et à un pixel, chaque élément atténuant étant configuré pour atténuer les ondes lumineuses convergeant vers le foyer image de la lentille à laquelle il est associé, et **en ce**

que :

- chaque élément atténuant est :

• soit un masque opaque (32) à la longueur d'onde d'émission ;
• soit un élément déphasant (32'), formé d'un matériau transparent agencé pour induire un déphasage, le déphasage étant déterminé par rapport à une onde lumineuse se propageant en l'absence de l'élément atténuant ;

- chaque élément atténuant s'étend entre la microlentille et le pixel auxquels il est associé ; de façon que chaque élément atténuant atténue chaque onde lumineuse (13) se propageant vers ou depuis le foyer image d'une microlentille.

2. Dispositif selon la revendication 1 dans lequel

- les pixels sont coplanaires, et répartis selon un plan de détection ;
- les foyers image respectifs de chaque microlentille sont coplanaires, et forment un plan focal (P), parallèle au plan de détection ;
- les éléments atténuants (32, 32') s'étendent dans le plan focal ou dans un plan parallèle au plan focal.

3. Dispositif selon la revendication 2 dans lequel les éléments atténuants s'étendent dans un plan parallèle au plan focal, ledit plan parallèle étant disposé à une distance inférieure à 1 mm du plan focal.

4. Dispositif selon l'une quelconque des revendications précédentes, dans lequel

- les pixels sont coplanaires, et répartis selon un plan de détection ;
- chaque élément atténuant s'étend, parallèlement au plan de détection, avec une diagonale ou un plus grand diamètre inférieur à 2 fois la longueur d'onde d'émission.

5. Dispositif selon l'une quelconque des revendications précédentes, dans lequel chaque élément atténuant (32) est un masque opaque, à la longueur d'onde d'émission.

6. Dispositif selon l'une quelconque des revendications précédentes, dans lequel

- chaque élément atténuant est un élément déphasant (32') ;
- le déphasage engendré par chaque élément déphasant est du quart de la longueur d'onde d'émission, où d'un multiple impair du quart de la longueur d'onde d'émission.

7. Dispositif selon l'une quelconque des revendications précédentes, dans lequel

- chaque élément atténuant est un élément déphasant (32') ;
- chaque élément atténuant est formé d'une inclusion d'un premier matériau dans ou sur une couche support (33) formée d'un deuxième matériau.

8. Dispositif selon l'une quelconque des revendications précédentes, dans lequel chaque élément atténuant est solidaire d'une couche support (33), la couche support étant solidaire de la pluralité de microlentilles ou disposée à distance de la pluralité de microlentilles.

9. Dispositif selon l'une quelconque des revendications précédentes, dans lequel chaque élément atténuant (32, 32') est solidaire du capteur d'image.

10. Dispositif selon l'une quelconque des revendications précédentes, dans lequel la longueur d'onde d'émission est comprise entre 800 nm et 15 μm.

11. Dispositif selon l'une quelconque des revendications précédentes, dans lequel :

- la distance entre l'échantillon et la pluralité de microlentilles est inférieure à 1 mm ou à 500 μm ;
- et/ou la distance entre la pluralité de microlentilles et le capteur d'image est inférieure à 1 mm ou à 500 μm ;
- et/ou la distance entre l'échantillon et le capteur d'image est inférieure à 1 mm.

**Patentansprüche**

1. Vorrichtung (1) zur Beobachtung einer Probe, umfassend:

- eine Lichtquelle (10), die dazu ausgestaltet ist, eine Lichtwelle (11) mit einer Emissionswellenlänge entlang einer Ausbreitungsrichtung (Z) zu emittieren;
- einen Bildsensor (35), der mehrere Pixel (36) umfasst;
- eine Mehrzahl (30) von konvergenten Mikrolinsen (31), wobei jede Mikrolinse gegenüber einem Pixel angeordnet ist, wobei jede Mikrolinse einen Bildbrennpunkt umfasst, wobei jede Mikrolinse dazu ausgestaltet ist, ausgehend von aus der Lichtquelle hervorgegangenen Lichtwellen, die sich parallel zu der Ausbreitungsrichtung ausbreiten, ein Lichtwellenbündel (13) zu bilden, das zu dem Bildbrennpunkt der Mikrolinse hin konvergiert;

- wobei die Vorrichtung dazu ausgestaltet ist, die Probe (20) zwischen der Lichtquelle und der Matrix aus Mikrolinsen zu halten;

- wobei die Vorrichtung **dadurch gekennzeichnet ist, dass** sie mehrere dämpfende Elemente (32, 32') umfasst, wobei jedes dämpfende Element einer Mikrolinse und einem Pixel zugeordnet ist, wobei jedes dämpfende Element dazu ausgestaltet ist, die Lichtwellen zu dämpfen, die zu dem Bildbrennpunkt der Linse hin konvergieren, der es zugeordnet ist, und dass:

    - es sich bei jedem dämpfenden Element handelt um:

        • entweder eine für die Emissionswellenlänge undurchlässige Maske (32);
        • oder ein phasenverschiebendes Element (32'), das aus einem transparenten Material gebildet ist und dazu ausgebildet ist, eine Phasenverschiebung zu bewirken, wobei die Phasenverschiebung in Bezug auf eine Lichtwelle bestimmt wird, die sich ohne das dämpfende Element ausbreitet;

    - wobei sich jedes dämpfende Element zwischen der Mikrolinse und dem Pixel, denen es zugeordnet ist, erstreckt;

so dass jedes dämpfende Element jede Lichtwelle (13) dämpft, die sich zu oder von dem Bildbrennpunkt einer Mikrolinse ausbreitet.

2. Vorrichtung nach Anspruch 1, wobei

    - die Pixel komplanar sind und entlang einer Detektionsebene verteilt sind;
    - die jeweiligen Bildbrennpunkte jeder Mikrolinse komplanar sind und eine Brennebene (P) bilden, die parallel zu der Detektionsebene ist;
    - die dämpfenden Elemente (32, 32') sich in der Brennebene oder in einer zu der Brennebene parallelen Ebene erstrecken.

3. Vorrichtung nach Anspruch 2, wobei sich die dämpfenden Elemente in einer zu der Brennebene parallelen Ebene erstrecken, wobei die parallele Ebene in einem Abstand von weniger als 1 mm von der Brennebene angeordnet ist.

4. Vorrichtung nach einem der vorhergehenden Ansprüche, wobei

    - die Pixel komplanar sind und entlang einer Detektionsebene verteilt sind;
- jedes dämpfende Element sich parallel zu der Detektionsebene erstreckt, mit einer Diagonale oder einem größten Durchmesser von weniger als dem 2-Fachen der Emissionswellenlänge.

5. Vorrichtung nach einem der vorhergehenden Ansprüche, wobei jedes dämpfende Element (32) eine für die Emissionswellenlänge undurchlässige Maske ist.

6. Vorrichtung nach einem der vorhergehenden Ansprüche, wobei

    - jedes dämpfende Element ein phasenverschiebendes Element (32') ist;
    - die durch jedes phasenverschiebende Element herbeigeführte Phasenverschiebung ein Viertel der Emissionswellenlänge oder ein ungerades Vielfaches eines Viertels der Emissionswellenlänge beträgt.

7. Vorrichtung nach einem der vorhergehenden Ansprüche, wobei

    - jedes dämpfende Element ein phasenverschiebendes Element (32') ist;
    - jedes dämpfende Element aus einem Einschluss eines ersten Materials in eine oder auf einer Trägerschicht (33) gebildet wird, die aus einem zweiten Material gebildet ist.

8. Vorrichtung nach einem der vorhergehenden Ansprüche, wobei jedes dämpfende Element mit einer Trägerschicht (33) fest verbunden ist, wobei die Trägerschicht mit der Mehrzahl von Mikrolinsen fest verbunden ist oder von der Mehrzahl von Mikrolinsen beabstandet angeordnet ist.

9. Vorrichtung nach einem der vorhergehenden Ansprüche, wobei jedes dämpfende Element (32, 32') mit dem Bildsensor fest verbunden ist.

10. Vorrichtung nach einem der vorhergehenden Ansprüche, wobei die Emissionswellenlänge zwischen 800 nm und 15 μm beträgt.

11. Vorrichtung nach einem der vorhergehenden Ansprüche, wobei:

    - der Abstand zwischen der Probe und der Mehrzahl von Mikrolinsen weniger als 1 mm oder als 500 μm beträgt;
    - und/oder der Abstand zwischen der Mehrzahl von Mikrolinsen und dem Bildsensor weniger als 1 mm oder als 500 μm beträgt;
    - und/oder der Abstand zwischen der Probe und dem Bildsensor weniger als 1 mm beträgt.

**Claims**

1. Device (1) for observing a sample, comprising

    - a light source (10), configured to emit a light wave (11) in a direction of propagation (Z), according to an emission wavelength;
    - an image sensor (35), comprising several pixels (36);
    - a plurality (30) of convergent microlenses (31), each microlens being disposed facing a pixel, each microlens comprising an image focus, each microlens being configured to form, from light waves from the light source, being propagated parallel to the direction of propagation, a light wave beam (13) converging towards the image focus of said microlens;
    - the device being configured to hold the sample (20) between the light source and the matrix of microlenses;
    - the device being **characterized in that** it comprises several attenuating elements (32, 32'), each attenuating element being associated with a microlens and with a pixel, each attenuating element being configured to attenuate the light waves converging towards the image focus of the lens with which it is associated, and **in that**:

        - each attenuating element is:

            • either a mask (32) that is opaque to the emission wavelength;
            • or a phase-shifting (32') element, formed from a transparent material arranged to induce a phase-shift, the phase-shift being determined with respect to a light wave being propagated in the absence of the attenuating element;

        - each attenuating element extends between the microlens and the pixel with which it is associated;

    such that each attenuating element attenuates each light wave (13) being propagated to or from the image focus of a microlens.

2. Device according to Claim 1, wherein

    - the pixels are coplanar, and distributed according to a detection plane;
    - the respective image focuses of each microlens are coplanar, and form a focal plane (P), parallel to the detection plane;
    - the attenuating elements (32, 32') extend in the focal plane or in a plane parallel to the focal plane.

3. Device according to Claim 2, wherein the attenuating elements extend in a plane parallel to the focal plane, said parallel plane being disposed at a distance less than 1 mm from the focal plane.

4. Device according to any one of the preceding claims, wherein

    - the pixels are coplanar, and distributed according to a detection plane;
    - each attenuating element extends parallel to the detection plane, with a diagonal or a greater diameter less than two times the emission wavelength.

5. Device according to any one of the preceding claims, wherein each attenuating element (32) is a mask that is opaque to the emission wavelength.

6. Device according to any one of the preceding claims, wherein

    - each attenuating element is a phase-shifting element (32');
    - the phase-shift created by each phase-shifting element is a quarter of the emission wavelength, or an odd multiple of the quarter of the emission wavelength.

7. Device according to any one of the preceding claims, wherein

    - each attenuating element is a phase-shifting element (32');
    - each attenuating element is formed by an inclusion of a first material in or on a support formed by a second material.

8. Device according to any one of the preceding claims, wherein each attenuating element is secured to a support layer (33), the support layer being secured to the plurality of microlenses or disposed at a distance from the plurality of microlenses.

9. Device according to any one of the preceding claims, wherein each attenuating element (32, 32') is secured to the image sensor.

10. Device according to any one of the preceding claims, wherein the emission wavelength lies between 800 nm and 15 $\mu$m.

11. Device according to any one of the preceding claims, wherein:

    - the distance between the sample and the plurality of microlenses is less than 1 mm or than 500 $\mu$m ;

- and/or the distance between the plurality of microlenses and the image sensor is less than 1 mm or than 500 $\mu$m ;
- and/or the distance between the sample and the image sensor is less than 1 mm.

**Fig. 1A**

**Fig. 1B**

**Fig. 2**

**Fig. 3**

**Fig. 4**

**Fig. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2556164 B1
- US 11313792 B